# EUROPEAN PATENT APPLICATION

(11) **EP 4 845 195 A1**
(43) Date of publication of application: **25.11.2026**
(21) Application number: 24917811.2
(22) Date of filing: 19.01.2024
(51) Int. Cl.: H04W 12/37

(54) **INFORMATION PROCESSING METHOD, COMMUNICATION SYSTEM, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2024/073381
(87) International publication number: WO 2025/152190

(57) **Abstract**

Embodiments of the present disclosure provide an information processing method, a communication system, and a storage medium. The information processing method is executed by an access network device, and comprises: determining security protection for UP data of a first terminal and UP data of a second terminal on the basis of first indication information and second indication information, wherein the first indication information is used for indicating a transmission mode and/or security strategy for the UP data of the first terminal, and the second indication information is used for indicating a transmission mode and/or security strategy for the UP data of the second terminal. In this way, an access network device can determine security protection for UP data of a first terminal and UP data of a second terminal, so that the security of first termina-satellite-second terminal communication can be improved.

## Description

### TECHNICAL FIELD

The present disclosure relates to the field of communication technologies, and in particular, to an information processing method, a communication system and a storage medium.

### BACKGROUND

In the field of communication technologies, satellite communication technologies have been introduced, that is, user equipments (UEs) can access networks via satellites for communication. UE-satellite-UE (UE-SAT-UE) communication refers to the communication between UEs under the coverage of one or more serving satellites via local switching without the user plane (UP) data going through the ground network. For example, the UE can be a terminal.

### SUMMARY

Embodiments of the present disclosure need to address the issue of how to handle the security protection on UP data of a first terminal and UP data of a second terminal in a first terminal-satellite-second terminal (i.e., UE-SAT-UE) communication scenario.

According to a first aspect of embodiments of the present disclosure, there is provided an information processing method, which is performed by an access network device, and includes: determining security protection on UP data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

According to a second aspect of embodiments of the present disclosure, there is provided an information processing method, which is performed by a core network device, and includes: sending first information to an access network device, wherein the first information includes first indication information, and the first indication information is configured to indicate a transmission mode and/or a security policy of UP data of a first terminal; sending second information to the access network device, wherein the second information includes second indication information, and the second indication information is configured to indicate a transmission mode and/or a security policy of UP data of a second terminal; wherein the first indication information and the second indication information are used by the access network device to determine security protection on the UP data of the first terminal and the second terminal.

According to a third aspect of embodiments of the present disclosure, there is provided an access network device, including: a first transceiving module, configured to determine security protection on UP data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

According to a fourth aspect of embodiments of the present disclosure, there is provided a core network device, including: a second transceiving module, configured to send first information to an access network device, wherein the first information includes first indication information, and the first indication information is configured to indicate a transmission mode and/or a security policy of UP data of a first terminal; the second transceiving module, further configured to send second information to the access network device, wherein the second information includes second indication information, and the second indication information is configured to indicate a transmission mode and/or a security policy of UP data of a second terminal; wherein the first indication information and the second indication information are used by the access network device to determine security protection on the UP data of the first terminal and the second terminal.

According to a fifth aspect of embodiments of the present disclosure, there is provided a communication device, including one or more processors; wherein the communication device is configured to perform the first and second aspects, or implementations of the first and second aspects.

According to a sixth aspect of embodiments of the present disclosure, there is provided a communication system, including: an access network device and a core network device; wherein the access network device is configured to perform the method described in implementations of the first aspect, and the core network device is configured to perform the method described in implementations of the second aspect.

According to a seventh aspect of embodiments of the present disclosure, there is provided a storage medium storing instructions which, when executed on a communication device, cause the communication device to perform the method described in the first and second aspects, or implementations of the first and second aspects.

The embodiments of the present disclosure enable the access device to achieve secure protection on the UP data of the first terminal and the UP data of the second terminal in the first terminal-satellite-second terminal (i.e., UE-SAT-UE) communication scenario.

### BRIEF DESCRIPTION OF THE DRAWINGS

To more clearly illustrate the technical solutions of embodiments of the present disclosure, the drawings needed in the description of the embodiments will be introduced below. The following drawings are only some embodiments of the present disclosure and do not impose specific limitations on the protection scope of the present disclosure.
FIG. 1A shows a schematic structural diagram of an information processing system according to an embodiment of the present disclosure.
FIG. 1B shows a schematic diagram of a scenario delivering services for UE-SAT-UE according to an example embodiment.
FIG. 2 shows a schematic interactive diagram of an information processing method according to an embodiment of the present disclosure.
FIG. 3A shows a schematic flowchart of an information processing method according to an embodiment of the present disclosure.
FIG. 3B shows a schematic flowchart of an information processing method according to an embodiment of the present disclosure.
FIG. 3C shows a schematic flowchart of an information processing method according to an embodiment of the present disclosure.
FIG. 3D shows a schematic flowchart of an information processing method according to an embodiment of the present disclosure.
FIG. 4A shows a schematic flowchart of an information processing method according to an embodiment of the present disclosure.
FIG. 4B shows a schematic flowchart of an information processing method according to an embodiment of the present disclosure.
FIG. 5 shows a schematic flowchart of an information processing method according to an embodiment of the present disclosure.
FIG. 6A shows a schematic structural diagram of an access network device according to an embodiment of the present disclosure.
FIG. 6B shows a schematic structural diagram of a core network device according to an embodiment of the present disclosure.
FIG. 7A shows a schematic structural diagram of a communication device provided according to an embodiment of the present disclosure.
FIG. 7B shows a schematic structural diagram of a chip provided according to an embodiment of the present disclosure.

### DETAILED DESCRIPTION

Embodiments of the present disclosure provide an information processing method, a communication system, and a storage medium.

In a first aspect, embodiments of the present disclosure provide an information processing method, which is performed by an access network device, and includes: determining security protection on UP data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

In the above embodiments, the access network device can determine the security protection on the UP data of the first terminal and the second terminal (in the case of UE-SAT-UE communication), which can improve the security of the first terminal-satellite-second terminal communication.

In combination with some embodiments of the first aspect, in some embodiments, determining the security protection on the UP data of the first terminal and the second terminal includes at least one of: determining whether the security protection needs to be applied to the UP data of the first terminal and the second terminal; determining whether consistent security protection is applied to the UP data of the first terminal and the second terminal; or determining a security policy for the security protection on the UP data of the first terminal and/or the second terminal.

In the above embodiments, the access network device can determine whether the first terminal and the second terminal perform the security protection, whether they perform consistent security protection, and/or the security policy for the security protection, thereby facilitating unified security protection on the UP data during the first terminal-satellite-second terminal communication.

In combination with some embodiments of the first aspect, in some embodiments, the method further includes: receiving first information sent by a core network device, wherein the first information includes the first indication information; and receiving second information sent by the core network device, wherein the second information includes the second indication information.

In the above embodiments, the access network device can receive the first information of the first terminal and the second information of the second terminal from the core network device, which facilitates the subsequent determination of the security protection on the UP data based on the first indication information included in the first information and the second indication information included in the second information.

In combination with some embodiments of the first aspect, in some embodiments, determining the security protection on the user plane (UP) data of the first terminal and the second terminal based on the first indication information and the second indication information includes one of: in a case where the transmission mode of the UP data indicated by the first indication information and the transmission mode of the UP data indicated by the second indication information are UE-SAT-UE local transmission, determining to enable judgement of consistent security protection on the UP data of the first terminal and the second terminal; in a case where the security policy of the UP data indicated by the first indication information and the security policy of the UP data indicated by the second indication information are the same and are a first type of security policy, determining that consistent security protection is applied to the UP data of the first terminal and the second terminal; in a case where the security policy of the UP data indicated by the first indication information and the security policy of the UP data indicated by the second indication information are the same and are a second type of security policy, determining that how to perform the consistent security protection on the UP data is determined based on the access network device; or in a case where the security policy of the UP data indicated by the first indication information and the security policy of the UP data indicated by the second indication information are different, determining, according to categories of security policies respectively indicated by the first indication information and the second indication information, whether consistent protection is applied to the UP data of the first terminal and the second terminal.

In the above embodiments, the access network device can determine, based on the first indication information and the second indication information, whether to enable the consistent protection on the UP data of the first terminal and the second terminal. Alternatively, it can accurately determine, based on the security policies indicated by the first indication information and the second indication information, whether the consistent security policy needs to be applied to the UP data of the first terminal and the second terminal, and the specific security policy if the consistent security protection is required.

In combination with some embodiments of the first aspect, in some embodiments, the first type of security policy includes protection required or protection not required; and/or, the second type of security policy includes preferred protection, wherein the preferred protection indicates security protection selected by the access network device is preferred.

In the above embodiments, the first type of security policy can be specifically defined as either protection required or protection not required, and/or the second security policy is specifically defined as including the preferred protection, thereby facilitating the access network device to determine the security protection on the UP data based on different categories of security policies.

In combination with some embodiments of the first aspect, in some embodiments, determining, according to the categories of security policies respectively indicated by the first indication information and the second indication information, whether the consistent protection is applied to the UP data of the first terminal and the second terminal includes at least one of: in a case where one of the first indication information and the second indication information indicates the first type of security policy and the other indicates the second type of security policy, determining that the consistent protection of the first type of security policy is applied to the UP data of the first terminal and the second terminal, wherein the first type of security policy includes protection required or protection not required, and the second type of security policy includes preferred protection; or in a case where the first indication information and the second indication information indicate the first type of security policy, and the security policies indicated by the first indication information and the second indication information are different, determining that the consistent protection is unable to be applied to the UP data of the first terminal and the second terminal.

In the above embodiments, if one of the security policies in the first terminal and the second terminal is either security protection required or security protection not required, and the other is the preferred protection, it can be determined that the first terminal and the second terminal need to perform the consistent protection. Alternatively, if one of the security policies in the first terminal and the second terminal is protection required and the other is protection not required, it can be determined that consistent security protection cannot be performed. In this way, appropriate and accurate security protection can be determined for different application scenarios.

In combination with some embodiments of the first aspect, in some embodiments, the method further includes: in a case where it is determined that the first terminal and the second terminal are unable to perform the consistent protection, rejecting to establish a session with the first terminal and the second terminal; or in a case where it is determined that the first terminal and the second terminal are unable to perform the consistent protection, performing the security protection on the UP data of the first terminal based on the security policy indicated by the first indication information, and/or, performing the security protection on the UP data of the second terminal based on the security policy indicated by the second indication information.

In the above embodiments, when the consistent security protection cannot be performed, the situation of data leakage due to the lack of security protection in the first terminal-satellite-second terminal communication can be reduced by rejecting to establish the session. Alternatively, when the consistent security protection cannot be performed, the first and second terminals are allowed to perform security protection according to their own security policies, thereby enabling the first terminal-satellite-second terminal communication.

In combination with some embodiments of the first aspect, in some embodiments, the method further includes: activating the security protection on the UP data of the first terminal and/or the second terminal based on the security policy for the UP data of the first terminal and the second terminal.

In the above embodiments, after the security policy is configured, it can be activated to provide the security protection.

In combination with some embodiments of the first aspect, in some embodiments, the method further includes: sending third information to the first terminal and/or the second terminal, wherein the third information is configured to indicate the security protection on the UP data of the first terminal and/or the second terminal determined by the access network device, and the third information is used by the first terminal and/or the second terminal to perform the security protection on the UP data.

In the above embodiments, the third information can be sent to the first terminal and/or the second terminal so that the first terminal and/or the second terminal can perform the security protection based on the security policy configured by the access network device.

In combination with some embodiments of the first aspect, in some embodiments, the access network device includes a satellite base station; and/or, the core network device includes: an Access and Mobility Management Function (AMF), a Session Management Function (SMF), or a Policy Control Function (PCF).

In a second aspect, embodiments of the present disclosure provide an information processing method, which is performed by a core network device, and includes: sending first information to an access network device, wherein the first information includes first indication information, and the first indication information is configured to indicate a transmission mode and/or a security policy of UP data of a first terminal; sending second information to the access network device, wherein the second information includes second indication information, and the second indication information is configured to indicate a transmission mode and/or a security policy of UP data of a second terminal; wherein the first indication information and the second indication information are used by the access network device to determine security protection on the UP data of the first terminal and the second terminal.

In combination with some embodiments of the second aspect, in some embodiments, the method further includes: receiving the first information sent by the first terminal; and/or receiving the second information sent by the second terminal.

In combination with some embodiments of the second aspect, in some embodiments, the access network device includes a satellite base station; and/or, the core network device includes an AMF, an SMF, or a PCF.

In a third aspect, embodiments of the present disclosure provide an access network device, including: a first transceiving module, configured to determine security protection on UP data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

In a fourth aspect, embodiments of the present disclosure provide a core network device, including: a second transceiving module, configured to send first information to an access network device, wherein the first information includes first indication information, and the first indication information is configured to indicate a transmission mode and/or a security policy of UP data of a first terminal; the second transceiving module, further configured to send second information to the access network device, wherein the second information includes second indication information, and the second indication information is configured to indicate a transmission mode and/or a security policy of UP data of a second terminal; wherein the first indication information and the second indication information are used by the access network device to determine security protection on the UP data of the first terminal and the second terminal.

In a fifth aspect, embodiments of the present disclosure provide a communication device, including one or more processors; wherein the communication device is configured to perform the first and second aspects, or implementations of the first and second aspects.

In a sixth aspect, embodiments of the present disclosure provide a communication system, including: an access network device and a core network device; wherein the access network device is configured to perform the method described in implementations of the first aspect, and the core network device is configured to perform the method described in implementations of the second aspect.

In a seventh aspect, embodiments of the present disclosure provide a storage medium storing instructions that, when executed on a communication device, cause the communication device to perform the method described in the first and second aspects, or implementations of the first and second aspects.

In an eighth aspect, embodiments of the present disclosure provide a program product that, when executed by a communication device, causes the communication device to perform the method described in the first and second aspects, or implementations of the first and second aspects.

In a ninth aspect, embodiments of the present disclosure provide a computer program that, when running on a computer, causes the computer to perform the information processing method described in the first and second aspects, or implementations of the first and second aspects.

In a tenth aspect, embodiments of the present disclosure provide a chip or chip system. The chip or chip system includes a processing circuit configured to perform the method described in the first and second aspects, or implementations of the first and second aspects.

It can be understood that the aforementioned network devices, first devices, communication systems, storage media, program products, computer programs, chips, or chip systems are all used to execute the methods proposed in the embodiments of the present disclosure. Therefore, the beneficial effects they may achieve may be referred to in the corresponding methods, and will not be elaborated upon here.

Embodiments of the present disclosure provide an information processing method, a device, a communication system, and a storage medium. In some embodiments, the terms, such as information processing method and communication method, can be replaced with each other, the terms, such as information processing apparatus and communication apparatus, can be replaced with each other, and the terms, such as information processing system and communication system, can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the implementations in a certain embodiment can be arbitrarily combined; in addition, the embodiments can be arbitrarily combined, for example, some or all of the steps of different embodiments can be arbitrarily combined, and a certain embodiment can be arbitrarily combined with the implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", "one or more", or "at least one", etc. For example, when using articles such as "a", "an", "the" in English in translation, the noun after the article may be understood as a singular expression or a plural expression.

In the embodiments of the present disclosure, "plurality/multiple" refers to two or more.

In some embodiments, terms such as "at least one of", "one or more", "a plurality of", "multiple" and the like can be used interchangeably.

In some embodiments, the recording manners, such as "at least one of A and B", "A and/or B", "A in one case, B in another case", "in response to one case A, in response to another case B", can include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner, such as "A or B", can include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "in response to...", "in response to determining...", "in the case of...", "at the time of...", "when...", "if...", "in case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses and the like may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as apparatuses included in the network (e.g., an access network device, a core network device, etc.).

In some embodiments, the terms "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and so on can be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, also called device-to-device (D2D), vehicle-to-everything (V2X), etc.). In this case, it can also be set as a structure in which the terminal has all or part of the functions of the access network device. In addition, language such as "uplink" and "downlink" can also be replaced by language corresponding to the communication between terminals (for example, "side"). For example, uplink channels, downlink channels, etc. can be replaced by side channels, and uplinks, downlinks, etc. can be replaced by side links.

In some embodiments, the terminal may be replaced by an access network device, a core network device, or a network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

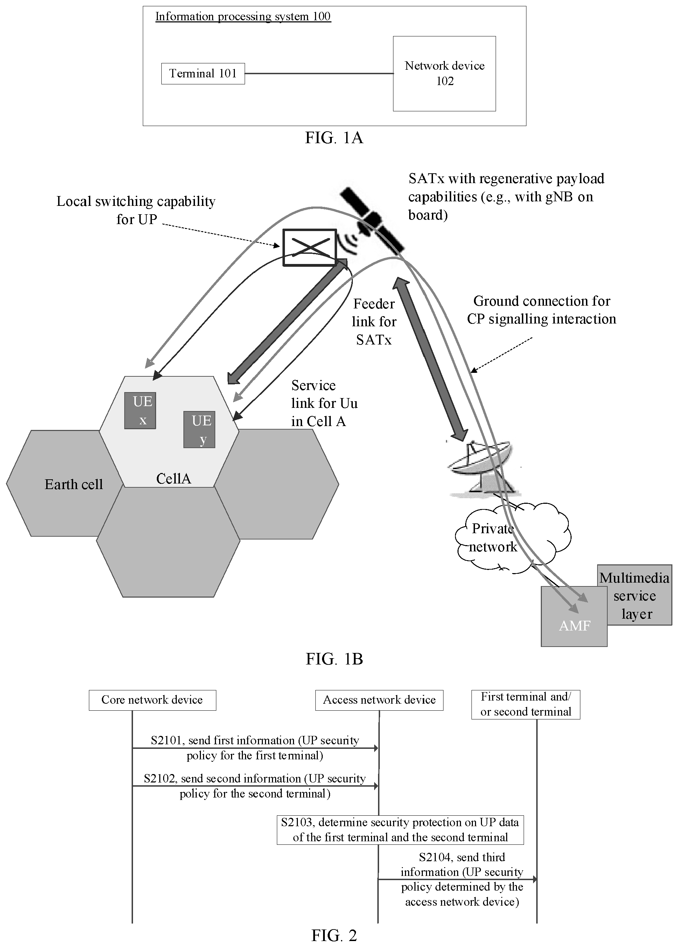

FIG. 1A shows a schematic structural diagram of an information processing system 100 according to an embodiment of the present disclosure. As shown in FIG. 1A, the information processing system 100 can include: a terminal 101 and a network device 102.

In some embodiments, the network device 102 can include at least one of an access network device or a core network device.

In some embodiments, the terminal 101 includes, for example, at least one of a mobile phone, a wearable device, an Internet of Things (IoT) device or terminal, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device is, for example, a node or device that accesses a terminal to a wireless network. The access network device can include at least one of an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wireless Fidelity (Wi-Fi) system, but is not limited thereto.

In some embodiments, the technical solutions of the present disclosure may be applicable to the Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may be composed of a central unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

In some embodiments, the core network device can be a single device, including a first device, a second device, etc., or it can be multiple devices or a group of devices, including all or part of the first device and the second device described above, respectively. The first device and the second device may be network elements, which may be virtual or physical. The core network includes, for example, at least one of an Evolved Packet Core (EPC), a 5G Core Network (5GCN), and a Next Generation Core (NGC).

It can be understood that the information processing system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The following embodiments of the present disclosure may be applied to the information processing system 100 shown in FIG. 1A, or part of the subjects, but are not limited thereto. The subjects shown in FIG. 1A are examples, and the information processing system can include all or part of the subjects in FIG. 1A, or can include other subjects other than FIG. 1A, and the number and form of the subjects are arbitrary, and the connection relationship between the subjects is an example, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle to Everything (V2X), systems using other communication methods, and next-generation systems expanded based on them. In addition, a combination of multiple systems (for example, a combination of LTE or LTE-A with 5G, etc.) may also be applied.

In some embodiments, UE-satellite-UE (UE-SAT-UE) communication refers to the communication between UEs under the coverage of one or more serving satellites via local switching without the user plane (UP) data going through the ground network. The UE-SAT-UE communication can be terminal-satellite-terminal communication; for example, it can be first terminal-satellite-second terminal communication.

For example, as shown in FIG. 1B, a scenario delivering services for UE-SAT-UE is provided. A network system described in FIG. 1B supports the UE-SAT-UE communication, and this network system can include UE x, UE y, and a base station (e.g., gNB) on board a Satellite (SAT) x. The gNB on satellite x has a feeder link with the ground, which can be used for the gNB on satellite x to connect to the core network. The gNB on satellite x forms a satellite cell A, which can be adjacent to a ground cell. The connection between the gNB on satellite x and the Uu interface between UE x and UE y is a satellite link. UE x and UE y can transmit user plane data based on the base station on satellite x. The connection between the gNB on satellite x and the ground can be used for control plane (CP) signaling interaction. Here, two UEs (e.g., UE x and UE y) are communicating, but this communication may involve more than two UEs. AMF represents a network function (NF) in the 5G core network, but other NFs (e.g., SMF) can also be included. Here, if the satellite serves more than one cell, the two or more UEs can be in different cells.

In some embodiments, security for user plane data over Uu interface is activated based on a security policy sent from the core network, and the security policy is set either by the Unified Data Management (UDM) or by the SMF based on a specific service requested by the UE. The SMF determines, at the protocol Data Unit (PDU) session establishment, the UP Security Enforcement information for a PDU session based on the following factors: subscribed Security Policy which is part of session management (SM) subscription information received from the UDM; or UP Security Policy locally configured per (Date Network Name (DNN), Single Network Slice Selection AssiSATnce Information (S-NSSAI)) in the SMF that is used when the UDM does not provide UP Security Policy information. Here, the Uu interface is a cellular communication interface between the UE and the base station.

In some embodiments, the UP security policy indicates whether the UP data security protection shall be activated or not at the Uu interface for that PDU session. The UP security policy is used to activate the security protection on confidentiality and/or integrity for the PDU session. According to the UP security policy provided by the SMF, if the UP security policy indicates "Required", the gNB activates Uu UP security protection per each Data Radio Bearer (DRB) using RRC signalling. Alternatively, if the UP security policy indicates "Not needed", the establishment of the PDU session will proceed without protection. Alternatively, if the UP security policy indicates "Preferred", the gNB can decide whether to activate the Uu UP security protection or not. But the gNB cannot overrule the UP security policy received from the SMF, when the UP security policy indicates "Required" or "Not needed".

In some embodiments, for UE to UE communication through the 5G network, the UEs establish separate PDU sessions with the core network device respectively via possibly separate gNBs. Then the gNB(s) apply to the separate PDU sessions of the UEs the UP security policies for the corresponding UEs which could be different.

For UE-SAT-UE communication which switches the UP data locally without letting it go through the ground network where the core network devices (e.g. SMF) reside, it could be assumed that the UE-SAT-UE communication can be established with a single PDU session. If the gNB receives UP security policies for the UEs respectively which could be different, how the gNB should apply the UP security policies to a single PDU session to protect the user plane data would be a problem.

Assuming two separate PDU sessions are established for UE-SAT-UE communication, it may lead to different security protection applied to the two Uu interfaces for a single UE-SAT-UE communication session, if the communicating UEs have different UP security policies. In this case, the higher security protection (e.g. both integrity and confidentiality protection) over one Uu interface may be bidden down by the lower security protection (e.g. only integrity protection or only confidentiality protection or no protection) over the other Uu interface.

Therefore, how the UP security policies of the communicating UEs should be handled by the gNB for the UE-SAT-UE communication and how the Uu UP security should be activated between the sending UE and the gNB on a satellite and the receiving UE need to be studied.

FIG. 2 shows a schematic interactive diagram of an information processing method according to an embodiment of the present disclosure. As shown in FIG. 2, the embodiment of the present disclosure relates to the information processing method, which is used in the information processing system 100. The method includes steps S2101 to S2104.

In the step S2101, the core network device sends first information to the access network device.

In some embodiments, the access network device receives the first information sent by the core network device.

In some embodiments, the access network device can be a base station; for example, it can be a satellite base station.

In some embodiments, the core network device can be AMF, SMF, or PCF, etc.

In some embodiments, the first information includes first indication information.

In some embodiments, the first information can include information related to a UP security policy. For example, the first information can include at least one of: session management information, a first identity of a first terminal, a service identity of UE-SAT-UE communication, a Data Network Name (DNN) used in the UE-SAT-UE communication, and Single Network Slice Selection AssiSATnce Information (S-NSSAI) used in the UE-SAT-UE communication, etc.

In some embodiments, the first identity can be any number or string used to indicate the first terminal. In some embodiments, the first identity can be a user information identity (User Info), a Subscription Concealed Identifier (SUCI), a Subscription Permanent Identity (SUPI) or a Globally Unique Temporary UE Identity (GUTI), etc. of the first terminal.

In some embodiments, the UE-SAT-UE communication can be configured with one or more services, and service traffic or service data of these services can be transmitted based on the UE-SAT-UE communication.

In some embodiments, the UE-SAT-UE communication can refer to local communication or satellite-based local communication.

In some embodiments, the name of the first information is not limited, and it may be, for example, security policy information, UP security policy information, UP security policy, or Uu UP security policy, etc.

In some embodiments, the first indication information is used to indicate a transmission mode and/or a security policy of UP data of the first terminal. For example, UP data may be replaced by UP traffic, UP service, UP service data, or UP service traffic, etc.

In some embodiments, the first indication information is used to indicate the security policy for the UP data of the first terminal in the case of UE-SAT-UE communication.

In some embodiments, the transmission mode can include UE-SAT-UE communication or non-UE-SAT-UE communication. The non-UE-SAT-UE communication may refer to communication other than UE-SAT-UE communication.

In some embodiments, the security policy can be the UP security policy in the previous embodiments.

In some embodiments, the security policy can include a first type of security policy and/or a second type of security policy. For example, the first type of security policy can include protection required or protection not required. For example, the second type of security policy can include preferred protection, which indicates that the security protection or security policy selected by the access network device is preferred.

In some embodiments, the security policy can include protection required, protection not required and/or preferred protection.

In some embodiments, "protection required" can be "Required" in the previous embodiments, "protection not required" can be "Not needed" in the previous embodiments, and "preferred protection" can be "Preferred" in the previous embodiments.

In some embodiments, protection required can include integrity protection required and/or confidentiality protection required.

In some embodiments, protection not required can include security protection not required and/or confidentiality protection not required.

In some embodiments, preferred protection can include preferably selecting security protection and/or confidentiality protection selected by the access network device.

In some embodiments, the first indication information can include one or more bits, or one or more fields. For example, one or more bits of the first indication information may be used to indicate requiring integrity protection and/or confidentiality protection, not requiring security protection and/or confidentiality protection, and preferably selecting security protection and/or confidentiality protection selected by the access network device. For another example, different fields in the first indication information may be used to indicate requiring protection, not requiring protection and preferred protection, respectively; for example, when a first field of the first indication information is a first value, it indicates requiring integrity protection, or when the first field of the first indication information is a second value, it indicates requiring confidentiality protection, or when the first field of the first indication information is a third value, it indicates requiring integrity protection and confidentiality protection; for another example, when a second field of the first indication information is a first value, it indicates not requiring integrity protection, or when the second field of the first indication information is a second value, it indicates not requiring confidentiality protection, or when the second field of the first indication information is a third value, it indicates not requiring integrity protection and confidentiality protection.

In some embodiments, the name of the first indication information is not limited, and it may be, for example, UE-SAT-UE communication indication, security policy indication or the like.

In some embodiments, the first information is sent by the core network device after receiving a PDU session request sent by the first terminal. For example, the PDU session request is used to request the establishment of a PDU session. For example, the PDU session request can include identification information used to indicate that the second terminal serves as the target terminal. Here, the first terminal may be a first UE, UE1, or UE x in the previous embodiments.

In the step S2102, the core network device sends second information to the access network device.

In some embodiments, the access network device receives the second information sent by the core network device.

In some embodiments, the second information includes second indication information.

In some embodiments, the second information can include information related to the UP security policy. For example, the second information can include at least one of: session management information, a second identity of the second terminal, a service identity of UE-SAT-UE communication, a Data Network Name (DNN) used in the UE-SAT-UE communication, and Single Network Slice Selection AssiSATnce Information (S-NSSAI) used in the UE-SAT-UE communication, etc.

In some embodiments, the second identity can be any number or string used to indicate the second terminal. In some embodiments, the second identity can be a user information identity (User Info), a SUCI, a SUPI or a GUTI, etc. of the first terminal.

In some embodiments, the name of the second information is not limited, and it may be, for example, security policy information, UP security policy information, UP security policy, or Uu UP security policy, etc.

In some embodiments, the second indication information is used to indicate a transmission mode and/or a security policy of UP data of the second terminal.

In some embodiments, the second indication information is used to indicate a security policy for the UP data of the second terminal in the case of UE-SAT-UE communication.

In some embodiments, the second indication information can include one or more bits, or one or more fields. For example, one or more bits of the second indication information may be used to indicate requiring integrity protection and/or confidentiality protection, not requiring security protection and/or confidentiality protection, and preferably selecting security protection and/or confidentiality protection selected by the access network device. For another example, different fields in the second indication information may be used to indicate requiring protection, not requiring protection and preferred protection, respectively; for example, when a first field of the second indication information is a first value, it indicates requiring integrity protection, or when the first field of the second indication information is a second value, it indicates requiring confidentiality protection, or when the first field of the second indication information is a third value, it indicates requiring integrity protection and confidentiality protection; for another example, when a second field of the second indication information is a first value, it indicates not requiring integrity protection, or when the second field of the second indication information is a second value, it indicates not requiring confidentiality protection, or when the second field of the second indication information is a third value, it indicates not requiring integrity protection and confidentiality protection.

In some embodiments, the name of the second indication information is not limited, and it may be, for example, UE-SAT-UE communication indication, security policy indication or the like.

In some embodiments, the second information is sent by the core network device after receiving a PDU session request sent by the second terminal. For example, the PDU session request is used to request the establishment of a PDU session. Here, the second terminal may be a second UE, UE2, or UE y in the previous embodiments.

In the step S2103, the access network device determines security protection on the UP data of the first terminal and the second terminal.

In some embodiments, the access network device determines the security protection on the UP data in the case of first terminal-satellite-second terminal (UE-SAT-UE) communication.

In some embodiments, determining the security protection on the UP data of the first terminal and the second terminal includes at least one of: determining whether the first terminal supports a UE-SAT-UE transmission mode; determining whether to enable judgement or determination of the consistent security protection on the UP data of the first terminal and the second terminal; determining whether the UP data of the first terminal and the second terminal needs the security protection; determining whether the consistent security protection is applied to the UP data of the first terminal and the second terminal; or determining a security policy for the security protection on the UP data of the first terminal and/or the second terminal.

In some embodiments, when both the transmission mode of the UP data indicated by the first indication information and the transmission mode of the UP data indicated by the second indication information are UE-SAT-UE local transmission or UE-SAT-UE communication, the access network device determines to enable judgement of the consistent security protection on the UP data of the first terminal and the second terminal. Here, enabling the judgement of the consistent security protection may be: determining whether the consistent security protection is applied to the UP data of the first terminal and the second terminal.

In some embodiments, whether to perform the consistent security protection refers to whether to use the same security policy.

In some embodiments, when the security policy of the UP data indicated by the first indication information and the security policy of the UP data indicated by the second indication information are the same and are the first type of security policy, the access network device determines that the consistent security protection is applied to the UP data of the first terminal and the second terminal.

In some embodiments, when both the security policy of the UP data indicated by the first indication information and the security policy of the UP data indicated by the second indication information are protection required, the access network device determines that the consistent security protection is applied to the UP data of the first terminal and the second terminal, and can also determine the security policies for the UP data of the first terminal and the second terminal are both protection required.

For example, when both the security policy of the UP data indicated by the first indication information and the security policy of the UP data indicated by the second indication information are integrity protection required, it is determined that the consistent security protection is applied to the UP data of the first terminal and the second terminal, and it can also be determined that the security policies for the UP data of the first terminal and the second terminal are both integrity protection required.

For example, when both the security policy of the UP data indicated by the first indication information and the security policy of the UP data indicated by the second indication information are confidentiality protection required, it is determined that the consistent security protection is applied to the UP data of the first terminal and the second terminal, and it can also be determined that the security policies for the UP data of the first terminal and the second terminal are both confidentiality protection required.

For example, when both the security policy of the UP data indicated by the first indication information and the security policy of the UP data indicated by the second indication information are integrity protection and confidentiality protection required, it is determined that the consistent security protection is applied to the UP data of the first terminal and the second terminal, and it can also be determined that the security policies for the UP data of the first terminal and the second terminal are both integrity protection and confidentiality protection required.

In some embodiments, when both the security policy of the UP data indicated by the first indication information and the security policy of the UP data indicated by the second indication information are protection not required, the access network device determines that the consistent security protection is applied to the UP data of the first terminal and the second terminal, and can also determine that the security policies for the UP data of the first terminal and the second terminal are both protection not required.

For example, when both the security policy of the UP data indicated by the first indication information and the security policy of the UP data indicated by the second indication information are integrity protection not required, it is determined that the consistent security protection is applied to the UP data of the first terminal and the second terminal, and it can also be determined that the security policies for the UP data of the first terminal and the second terminal are both integrity protection not required.

For example, when both the security policy of the UP data indicated by the first indication information and the security policy of the UP data indicated by the second indication information are confidentiality protection not required, it is determined that the consistent security protection is applied to the UP data of the first terminal and the second terminal, and it can also be determined that the security policies for the UP data of the first terminal and the second terminal are both confidentiality protection not required.

For example, when both the security policy of the UP data indicated by the first indication information and the security policy of the UP data indicated by the second indication information are integrity protection and confidentiality protection not required, it is determined that the consistent security protection is applied to the UP data of the first terminal and the second terminal, and it can also be determined that the security policies for the UP data of the first terminal and the second terminal are both integrity protection and confidentiality protection not required.

For example, when both the security policy of the UP data indicated by the first indication information and the security policy of the UP data indicated by the second indication information are integrity protection not required and confidentiality protection required, it is determined that the consistent security protection is applied to the UP data of the first terminal and the second terminal, and it can also be determined that the security policies for the UP data of the first terminal and the second terminal are both integrity protection not required and confidentiality protection required.

For example, when both the security policy of the UP data indicated by the first indication information and the security policy of the UP data indicated by the second indication information are integrity protection required and confidentiality protection not required, it is determined that the consistent security protection is applied to the UP data of the first terminal and the second terminal, and it can also be determined that the security policies for the UP data of the first terminal and the second terminal are both integrity protection required and confidentiality protection not required.

In some embodiments, when the security policy of the UP data indicated by the first indication information and the security policy of the UP data indicated by the second indication information are the same and are the second type of security policy, the access network device determines that how to perform the consistent security protection on the UP data is determined based on the access network device.

In some embodiments, when both the security policy of the UP data indicated by the first indication information and the security policy of the UP data indicated by the second indication information are the preferred protection, the access network device determines that how to perform the consistent security protection on the UP data is determined based on the access network device. Here, determining how to perform the consistent security protection on the UP data can be determining whether to perform the consistent security protection.

For example, when both the security policy of the UP data indicated by the first indication information and the security policy of the UP data indicated by the second indication information are the preferred protection, the access network device determines the security policy for the UP data itself. In this case, the access network device may determine that the consistent protection is applied to the UP data or the consistent protection is not applied to the UP data; for instance, the access network device determines that the UP data of the first terminal and the second terminal requires protection, or that the UP data of the first terminal and the second terminal does not require protection, or, that one of the UP data of the first terminal and the second terminal requires protection or does not require protection.

In some embodiments, when the security policy of the UP data indicated by the first indication information and the security policy of the UP data indicated by the second indication information are different, the access network device determines, according to categories of the security policies respectively indicated by the first indication information and the second indication information, whether consistent protection is applied to the UP data of the first terminal and the second terminal.

In some embodiments, when one of the first indication information and the second indication information indicates the first type of security policy and the other indicates the second type of security policy, the access network determines that the consistent protection of the first type of security policy is applied to the UP data of the first terminal and the second terminal. The first type of security policy includes protection required or protection not required, and the second type of security policy includes preferred protection.

For example, when the first indication information indicates protection required, and the second indication information indicates preferred protection, it is determined that the consistent security protection is applied to the UP data of the first terminal and the second terminal, and it can also be determined that the security policies for the UP data of the first terminal and the second terminal are both protection required.

For example, when the first indication information indicates protection not required, and the second indication information indicates preferred protection, it is determined that the consistent security protection is applied to the UP data of the first terminal and the second terminal, and it can also be determined that the security policies for the UP data of the first terminal and the second terminal are both protection not required.

For example, when the first indication information indicates preferred protection, and the second indication information indicates protection required, it is determined that the consistent security protection is applied to the UP data of the first terminal and the second terminal, and it can also be determined that the security policies for the UP data of the first terminal and the second terminal are both protection required.

For example, when the first indication information indicates preferred protection, and the second indication information indicates protection not required, it is determined that the consistent security protection is applied to the UP data of the first terminal and the second terminal, and it can also be determined that the security policies for the UP data of the first terminal and the second terminal are both protection not required.

For example, when both the first indication information and the second indication information indicate preferred protection, it is determined that the consistent security protection is applied to the UP data of the first terminal and the second terminal, and it can also be determined that the security policies for the UP data of the first terminal and the second terminal are both protection not required or both protection required.

In some embodiments, when both the first indication information and the second indication information indicate the first type of security policy, and the security policies indicated by the first indication information and the second indication information are different, the access network device determines that the consistent protection is unable to be applied to the UP data of the first terminal and the second terminal. In some examples, being unable to apply the consistent protection means that no consistent protection is performed.

In some embodiments, when the first indication information indicates protection required and the second indication information indicates protection not required, the access network device determines that the consistent security protection cannot be applied to the UP data of the first terminal and the second terminal.

In some embodiments, when the first indication information indicates protection not required and the second indication information indicates protection required, the access network device determines that the consistent security protection cannot be applied to the UP data of the first terminal and the second terminal.

In some embodiments, when determining that the first terminal and the second terminal cannot perform the consistent protection, the access network device rejects to establish a session with the first terminal and the second terminal.

In some embodiments, the session is a PDU session or any other session related to the UP service.

In some embodiments, when the access network device determines that the first terminal and the second terminal cannot perform the consistent protection, it performs security protection on the UP data of the first terminal based on the security policy indicated by the first indication information, and/or performs security protection on the UP data of the second terminal based on the security policy indicated by the second indication information.

For example, when the first indication information indicates protection required and the second indication information indicates protection not required, it is determined that the consistent security protection cannot be applied to the UP data of the first terminal and the second terminal, and it is determined that the UP data of the first terminal requires security protection and the UP data of the second terminal does not require security protection.

For example, when the first indication information indicates protection not required and the second indication information indicates protection required, it is determined that the consistent security protection cannot be applied to the UP data of the first terminal and the second terminal, and it is determined that the UP data of the first terminal does not require security protection and the UP data of the second terminal requires security protection.

In some alternative embodiments, the access network device activates the security protection on the UP data of the first terminal and/or the second terminal based on the security policy for the UP data of the first terminal and the second terminal.

For example, if the UP data of the first terminal and the second terminal both requires protection, it is activated or determined that the security protection is applied to the UP data of the first terminal and the second terminal.

For example, if the UP data of the first terminal and the second terminal both does not require protection, it is activated or determined that the security protection is not applied to the UP data of the first terminal and the second terminal.

For example, if the UP data of the first terminal requires protection and the UP data of the second terminal does not require protection, it is activated or determined that the security protection is applied to the UP data of the first terminal and the security protection is not applied to the UP data of the second terminal.

For example, if the UP data of the first terminal does not require protection and the UP data of the second terminal requires protection, it is activated or determined that the security protection is not applied to the UP data of the first terminal and the security protection is applied to the UP data of the second terminal.

The protection required in the above embodiments includes confidentiality protection required and/or integrity protection required, and the protection not required includes confidentiality protection not required and/or integrity protection not required.

In the step S2104, the access network device sends third information to the first terminal and/or the second terminal.

In some embodiments, the first terminal and/or the second terminal receive the third information sent by the access network device.

In some embodiments, the third information is used to indicate the security protection, determined by the access network device, on the UP data of the first terminal and/or the second terminal, and the third information is used by the first terminal and/or the second terminal to perform security protection on the UP data.

In some embodiments, the security protection on the UP data of the first terminal and/or the second terminal determined by the access network device can include: security protection on the UP data of the first terminal and/or the second terminal determined by the access network device itself, or security protection on the UP data of the first terminal and/or the second terminal determined by the access network device based on the first indication information and the second indication information. Here, security protection may refer to a security policy, and the security protection may refer to protection required or protection not required, etc.

In some embodiments, the third information may also include at least one of: the first identity, the second identity, the service identity of the UE-SAT-UE communication, the Data Network Name (DNN) used in the UE-SAT-UE communication, and the Single Network Slice Selection AssiSATnce Information (S-NSSAI) used in the UE-SAT-UE communication, etc.

In some embodiments, the name of the third information is not limited, and it may be, for example, security policy information, UP security policy information, or security policy indication information.

The protection required in the above embodiments includes confidentiality protection required and/or integrity protection required, and the protection not required includes confidentiality protection not required and/or integrity protection not required.

In some alternative embodiments, the first terminal performs the security protection on the UP data based on the third information.

In some alternative embodiments, the second terminal performs the security protection on the UP data based on the third information.

In some alternative embodiments, the access network device may also send the third information to the core network device.

In some embodiments, the names of information, etc. are not limited to the names described in the embodiments, and terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" can be used interchangeably.

In some embodiments, "obtain", "acquire", "get", "receive", "transmit" "transmit bidirectionally", and "send and/or receive", etc. may be interchangeable, and may be interpreted as various meanings, such as receiving from another subject, obtaining from a protocol, obtaining from an upper layer, obtaining through self-processing, and autonomous implementation, etc.

In some embodiments, terms such as "send", "emit", "report", "issue", "transmit", "transmit bidirectionally", "send and/or receive" may be interchangeable.

In some embodiments, terms such as "certain", "preset", "presetting", "setting", "indicated", "a certain", "any", "first", etc., may be used interchangeably. "Certain A", "preset A", "preset A", "setting A", "indicated A", "a certain A", "any A", "first A" may be interpreted as A predefined in the protocol, or as A obtained through setting, configuration, or indication, or as specific A, certain A, any A, or first A, etc., which is not limited herein.

In some embodiments, the determination or judgment can be performed by a value represented by 1 bit (0 or 1), or by a true or false value (Boolean value) represented by true or false, or by comparison of numerical values (for example, comparison with a predetermined value), but is not limited thereto.

The information processing method involved in embodiments of the present disclosure can include at least one of steps S2101 to S2104. For example, step S2101 may be implemented as an independent embodiment; step S2102 may be implemented as an independent embodiment; step S2103 may be implemented as an independent embodiment; step S2104 may be implemented as an independent embodiment; a combination of steps S2101 and S2102 may be implemented as an independent embodiment; a combination of steps S2101 and S2103 may be implemented as an independent embodiment; a combination of steps S2102 and S2103 may be implemented as an independent embodiment; a combination of steps S2101, S2102, and S2103 may be implemented as an independent embodiment; a combination of steps S2103 and S2104 may be implemented as an independent embodiment; a combination of steps S2101 to S2104 may be implemented as an independent embodiment.

In some embodiments, steps S2101, S2102 and S2104 may be optional, and one or more of these steps may be omitted or substituted in different embodiments.

In some embodiments, steps S2101 and S2102 may be optional, and one or more of these steps may be omitted or substituted in different embodiments.

In some embodiments, step S2104 may be optional, and one or more of these steps may be omitted or substituted in different embodiments.

In embodiments of the present disclosure, individual embodiments can be implemented individually or in combination with each other, and steps in each embodiment can be distinguished by their orders.

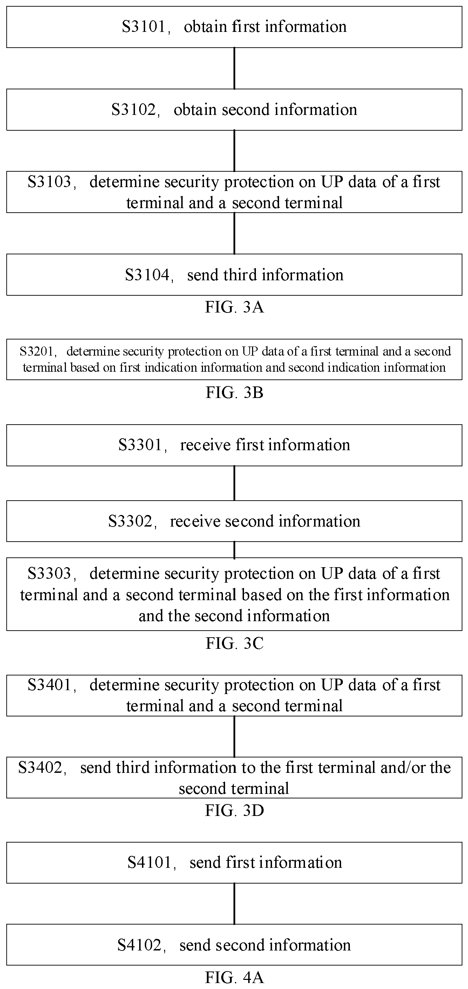

FIG. 3A shows a schematic flowchart of an information processing method according to an embodiment of the present disclosure. As shown in FIG. 3a, the embodiment of the present disclosure relates to the information processing method, which is performed by the access network device, and the method includes steps S3101 to S3104.

In the step S3101, first information is obtained.

The implementation of step S3101 can refer to the implementation of step S2101 in FIG. 2, and other related parts of the embodiment involved in FIG. 2, which will not be repeated here.

In some embodiments, the access network device receives the first information sent by the core network device. However, it is not limited thereto. The access network device may receive the first information sent by another entity.

In some embodiments, the access network device obtains the first information specified by the protocol.

In some embodiments, the access network device obtains the first information from an upper layer(s).

In some embodiments, the access network device performs processing to obtain the first information.

In some embodiments, step S3101 is omitted, the access network device autonomously implements the function indicated by the first information, or the above function is default or acquiescent.

In the step S3102, second information is obtained.

The implementation of step S3102 can refer to the implementation of step S2102 in FIG. 2, and other related parts of the embodiment involved in FIG. 2, which will not be repeated here.

In some embodiments, the access network device receives the second information sent by the core network device. However, it is not limited thereto. The access network device may receive the second information sent by another entity.

In some embodiments, the access network device obtains the second information specified by the protocol.

In some embodiments, the access network device obtains the second information from an upper layer(s).

In some embodiments, the access network device performs processing to obtain the second information.

In some embodiments, step S3102 is omitted, the access network device autonomously implements the function indicated by the second information, or the above function is default or acquiescent.

In the step S3103, security protection on UP data of the first terminal and the second terminal is determined.

The implementation of step S3103 can refer to the implementation of step S2103 in FIG. 2, and other related parts of the embodiment involved in FIG. 2, which will not be repeated here.

In the step S3104, third information is sent.

The implementation of step S3104 can refer to the implementation of step S2104 in FIG. 2, and other related parts of the embodiment involved in FIG. 2, which will not be repeated here.

In some embodiments, the access network device sends the third information to the first device, but is not limited thereto; it may also send the third information to another entity.

The information processing method involved in the embodiments of the present disclosure can include at least one of steps S3101 to S3104. For example, step S3101 may be implemented as an independent embodiment; step S3102 may be implemented as an independent embodiment; step S3103 may be implemented as an independent embodiment; step S3104 may be implemented as an independent embodiment; a combination of steps S3101 and S3102 may be implemented as an independent embodiment; a combination of steps S3101 and S3103 may be implemented as an independent embodiment; a combination of steps S3102 and S3103 may be implemented as an independent embodiment; a combination of steps S3101, S3102, and S3103 may be implemented as an independent embodiment; a combination of steps S3103 and S3104 may be implemented as an independent embodiment; and a combination of steps S3101 to S3104 may be implemented as an independent embodiment.

In some embodiments, steps S3101, S3102 and S3104 may be optional, and one or more of these steps may be omitted or substituted in different embodiments.

In some embodiments, steps S3101 and S3102 may be optional, and one or more of these steps may be omitted or substituted in different embodiments.

In some embodiments, step S3104 may be optional, and one or more of these steps may be omitted or substituted in different embodiments.

In embodiments of the present disclosure, individual embodiments can be implemented individually or in combination with each other, and steps in each embodiment can be distinguished by their orders.

FIG. 3B shows a schematic flowchart of an information processing method according to an embodiment of the present disclosure. As shown in FIG. 3B, the embodiment of the present disclosure relates to the information processing method, which is performed by the access network device, and the method includes a step S3201.

In the step S3201, security protection on UP data of a first terminal and UP data of a second terminal is determined based on first indication information and second indication information.

The implementation of step S3201 can refer to the implementations of step S2103 in FIG. 2 and step S3103 in FIG. 3A, and other related parts of the embodiments involved in FIG. 2 and FIG. 3A, which will not be repeated here.

In some embodiments, the first indication information is used to indicate a transmission mode and/or a security policy of the UP data of the first terminal, and the second indication information is used to indicate a transmission mode and/or a security policy of the UP data of the second terminal.

In some embodiments, determining the security protection on the UP data of the first terminal and the second terminal includes at least one of: determining whether security protection needs to be applied to the UP data of the first terminal and the second terminal; determining whether consistent security protection is applied to the UP data of the first terminal and the second terminal; or determining a security policy for the security protection on the UP data of the first terminal and the second terminal.

In some embodiments, the method further includes: receiving first information sent by a core network device, and the first information includes the first indication information; and receiving second information sent by the core network device, and the second information includes the second indication information.

In some embodiments, determining the security protection on the user plane (UP) data of the first terminal and the second terminal based on the first indication information and the second indication information includes one of: in a case where the transmission mode of the UP data indicated by the first indication information and the transmission mode of the UP data indicated by the second indication information are UE-SAT-UE local transmission, determining to enable judgement of consistent security protection on the UP data of the first terminal and the second terminal; in a case where the security policy of the UP data indicated by the first indication information and the security policy of the UP data indicated by the second indication information are the same and are a first type of security policy, determining that consistent security protection is applied to the UP data of the first terminal and the second terminal; in a case where the security policy of the UP data indicated by the first indication information and the security policy of the UP data indicated by the second indication information are the same and are a second type of security policy, determining that how to perform the consistent security protection on the UP data is determined based on the access network device; or in a case where the security policy of the UP data indicated by the first indication information and the security policy of the UP data indicated by the second indication information are different, determining, according to categories of security policies respectively indicated by the first indication information and the second indication information, whether consistent protection is applied to the UP data of the first terminal and the second terminal.

In some embodiments, the first type of security policy includes protection required or protection not required; and/or, the second type of security policy includes preferred protection, the preferred protection indicates security protection selected by the access network device is preferred.

In some embodiments, determining, according to the categories of the security policies respectively indicated by the first indication information and the second indication information, whether the consistent protection is applied to the UP data of the first terminal and the second terminal includes at least one of: in a case where one of the first indication information and the second indication information indicates the first type of security policy and the other indicates the second type of security policy, determining that the consistent protection of the first type of security policy is applied to the UP data of the first terminal and the second terminal, the first type of security policy includes protection required or protection not required, and the second type of security policy includes preferred protection; or in a case where both the first indication information and the second indication information indicate the first type of security policy, and the security policies indicated by the first indication information and the second indication information are different, determining that the consistent protection is unable to be applied to the UP data of the first terminal and the second terminal.

In some embodiments, the method further includes: in a case where it is determined that the first terminal and the second terminal are unable to perform the consistent protection, rejecting to establish a session with the first terminal and the second terminal; or in a case where it is determined that the first terminal and the second terminal are unable to perform the consistent protection, performing the security protection on the UP data of the first terminal based on the security policy indicated by the first indication information, and/or, performing the security protection on the UP data of the second terminal based on the security policy indicated by the second indication information.

In some embodiments, the method further includes: activating the security protection on the UP data of the first terminal and/or the second terminal based on the security protection on the UP data of the first terminal and the second terminal.

In some embodiments, the method further includes: sending third information to the first terminal and/or the second terminal, the third information is used to indicate the security protection on the UP data of the first terminal and/or the second terminal determined by the access network device, and the third information is used by the first terminal and/or the second terminal to perform the security protection on the UP data.

In some embodiments, the access network device includes a satellite base station; and/or, the core network device includes: an AMF, an SMF, or a PCF.

The above embodiments can be implemented individually or in combination with each other. The implementation can refer to the implementations of steps in FIGS. 2 and 3A, which will not be repeated here.

FIG. 3C shows a schematic flowchart of an information processing method according to an embodiment of the present disclosure. As shown in FIG. 3C, the embodiment of the present disclosure relates to the information processing method, which is performed by the access network device, and the method includes S3301 to S3303.

In the step S3301, first information is received.

The implementation of step S3301 can refer to the implementations of step S2101 in FIG. 2 and step S3101 in FIG. 3A, and other related parts of the embodiments involved in FIG. 2 and FIG. 3A, which will not be repeated here.

In the step S3302, second information is received.

The implementation of step S3302 can refer to the implementations of step S2102 in FIG. 2 and step S3102 in FIG. 3A, and other related parts of the embodiments involved in FIG. 2 and FIG. 3A, which will not be repeated here.

In the step S3303, security protection on UP data of a first terminal and a second terminal is determined based on the first information and the second information.

In some embodiments, the first information includes first indication information, and the second information includes second indication information.

The implementation of step S3303 can refer to the implementations of step S2103 in FIG. 2 and step S3103 in FIG. 3A, and other related parts of the embodiments involved in FIG. 2 and FIG. 3A, which will not be repeated here.

The above embodiments can be implemented individually or in combination with each other. The implementation can refer to the implementations of steps in FIGS. 2 and 3A, which will not be repeated here.

FIG. 3D shows a schematic flowchart of an information processing method according to an embodiment of the present disclosure. As shown in FIG. 3D, the embodiment of the present disclosure relates to the information processing method, which is performed by the access network device, and the method includes S3401 to S3402.

In the step S3401, security protection on UP data of a first terminal and a second terminal is determined.

The implementation of step S3401 can refer to the implementations of step S2103 in FIG. 2 and step S3103 in FIG. 3A, and other related parts of the embodiments involved in FIG. 2 and FIG. 3A, which will not be repeated here.

In the step S3402, third information is sent to the first terminal and/or the second terminal.

In some embodiments, the third information is used to indicate security protection on the UP data of the first terminal and/or the second terminal determined by the access network device.

The implementation of step S3402 can refer to the implementations of step S2104 in FIG. 2 and step S3104 in FIG. 3A, and other related parts of the embodiments involved in FIG. 2 and FIG. 3A, which will not be repeated here.

The above embodiments can be implemented individually or in combination with each other. The implementation can refer to the implementations of steps in FIGS. 2 and 3A, which will not be repeated here.

FIG. 4A shows a schematic flowchart of an information processing method according to an embodiment of the present disclosure. As shown in FIG. 4A, the embodiment of the present disclosure relates to the information processing method, which is performed by the core network device, and the method includes S4101 to S4102.

In the step S4101, first information is sent.

The implementation of step S4101 can refer to the implementations of step S2101 in FIG. 2, and other related parts of the embodiment involved in FIG. 2, which will not be repeated here.

In some embodiments, the core network device sends the first information to the access network device, but is not limited thereto; it may also send the first information to other entities.

In the step S4102, second information is sent.

The implementation of step S4201 can refer to the implementations of step S2102 in FIG. 2, and other related parts of the embodiment involved in FIG. 2, which will not be repeated here.

In some embodiments, the core network device sends the second information to the access network device, but is not limited thereto; it may also send the second information to other entities.

In some alternative embodiments, the core network device acquires the first information before the step S4101.

In some embodiments, the core network device receives the first information sent by the first terminal, but is not limited thereto; it may also receive the first information sent by other entities.

In some embodiments, the core network device obtains the first information specified by the protocol.

In some embodiments, the core network device obtains the first information from an upper layer(s).

In some embodiments, the core network device performs processing to obtain the first information.

In some alternative embodiments, the core network device acquires the second information before the step S4102.

In some embodiments, the core network device receives the second information sent by the second terminal, but is not limited thereto; it may also receive the second information sent by other entities.

In some embodiments, the core network device obtains the second information specified by the protocol.

In some embodiments, the core network device obtains the second information from an upper layer(s).

In some embodiments, the core network device performs processing to obtain the second information.

In some alternative embodiments, after the step S4102, the core network device may also obtain third information.

In some embodiments, the core network device receives third information sent by the access network device, but is not limited thereto; it may also receive the third information sent by other entities.

In some embodiments, the core network device obtains the third information specified by the protocol.

In some embodiments, the core network device obtains the third information from an upper layer(s).

In some embodiments, the core network device performs processing to obtain the third information.

In some embodiments, the first device sends a measurement result to the network device, but is not limited thereto; it may also send the measurement result to other entities.

The information processing method involved in the embodiments of the present disclosure can include at least one of steps S4101 to S4102. For example, step S4101 may be implemented as an independent embodiment, and step S4102 may be implemented as an independent embodiment; and steps S4101 and S4102 may be implemented as independent embodiments.

In some embodiments, step S4101 may be optional, and one or more of these steps may be omitted or substituted in different embodiments.

In some embodiments, step S4102 may be optional, and one or more of these steps may be omitted or substituted in different embodiments.

In embodiments of the present disclosure, individual embodiments can be implemented individually or in combination with each other, and the steps in each embodiment can be distinguished by their order.

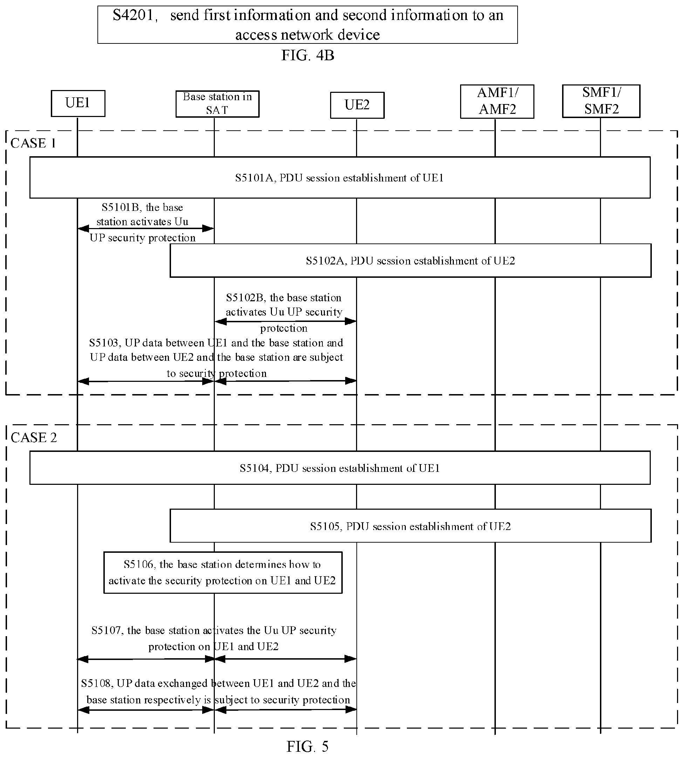

FIG. 4B shows a schematic flowchart of an information processing method according to an embodiment of the present disclosure. As shown in FIG. 4B, the embodiment of the present disclosure relates to the information processing method, which is performed by the core network device, and the method includes:
in step S4201, first information and second information are sent to the access network device.

In some embodiments, the first and second information can be sent separately or together.

The implementation of step S4201 can refer to the implementations of step S2101 in FIG. 2 and step S4101 in FIG. 4A, and other related parts of the embodiment involved in FIG. 2 and FIG. 4A, which will not be repeated here.

In some embodiments, the first indication information is used to indicate a transmission mode and/or a security policy of UP data of the first terminal; the second information includes the second indication information, and the second indication information is used to indicate a transmission mode and/or a security policy of UP data of the second terminal. The first indication information and the second indication information are used by the access network device to determine security protection on the UP data of the first terminal and the second terminal.

In some embodiments, the method further includes: receiving the first information sent by the first terminal; and/or receiving the second information sent by the second terminal.

In some embodiments, the access network device includes a satellite base station; and/or, the core network device includes an AMF, an SMF, or a PCF.

The above embodiments can be implemented individually or in combination with each other. Implementations can refer to implementations of FIGS. 2 and 4A, which will not be repeated here.

FIG. 5 shows a schematic flowchart of an information processing method according to an embodiment of the present disclosure. As shown in FIG. 5, the embodiment of the present disclosure relates to the information processing method, and the method includes:

In some embodiments, the above method can include CASE1 or CASE2, where CASE1 represents the assumed procedures reusing the existing mechanisms, and CASE2 represents the enhanced procedures for consistent protection on the entire UP data. CASE1 can include steps S5101 to S5103, where step S5101 can include steps S5101A and/or S5101B, and step S5102 can include steps S5102A and/or S5102B. CASE2 can include steps S5104 to S5108.

### CASE1:

In the step S5101A, a PDU session of UE1 is established.

In some embodiments, UE1 initiates a PDU session establishment procedure towards the core network device, during which the UP security policy for UE1 is sent to the base station (e.g., gNB) by the core network device. This base station is a base station on the satellite, such as a satellite base station.

In some embodiments, UE1 can be the first terminal in the previous embodiments. The core network device can be the AMF or SMF in the previous embodiments. The AMF of UE1 can be AMF1, and the SMF of UE1 can be SMF1.

In the step S5101B, the base station activates Uu UP security protection.

In some embodiments, the base station activates the Uu UP security protection based on the received security policy for UE1. Uu UP security protection can be security protection on the UP data of the Uu interface, and the Uu interface is a communication interface between UE1 and the base station.

In the step S5102A, a PDU session of UE2 is established.

In some embodiments, when it is triggered by the network for the communication requested by UE1, UE2 initiates the PDU session establishment procedure towards the core network device, during which the UP security policy for UE2 is sent to the base station by the core network device.

In some embodiments, UE2 can be the second terminal in the previous embodiments, and the core network device can be the AMF or SMF in the previous embodiments. The AMF of UE2 can be AMF2, and the SMF of UE2 can be SMF2.

In the step S5102B, the base station activates Uu UP security protection.

In some embodiments, the base station activates the Uu UP security protection based on the received security policy for UE2. Uu UP security protection can be security protection on the UP data of the Uu interface, and the Uu interface is a communication interface between UE2 and the base station.

In some embodiments, the UP security policy for UE1 (UE1 UP security policy) may differ from the UP security policy for UE2 (UE2 UP security policy). Therefore, the Uu UP security protection activated for UE1 may differ from the Uu UP security protection activated for UE2.

In the step S5103, the UP data between UE1 and the base station and the UP data between UE2 and the base station are subject to the security protection.

In some embodiments, the UP data between UE1 and the base station is protected by the activated security policy for UE1, and the UP data between UE2 and the base station is protected by the activated security policy for UE2.

In some embodiments, if the Uu UP security policy activated for UE1 is different from the Uu UP security policy activated for UE2, the security protection applied to the UP data between UE1 and the base station may be different from the protection applied to the UP data between UE2 and the base station.

In some embodiments, if the existing mechanisms are reused, it may lead to inconsistent security protection applied to the UP data for a single UE-satellite communication session. In this case, the higher security policy protection (e.g. both integrity and confidentiality protection) of one segment of UP data will be downgraded by the lower security policy protection (e.g. only integrity protection or only confidentiality protection or no protection) of another segment of UP data.

### CASE2:

In the step S5104, a PDU session of UE1 is established.

In some embodiments, UE1 initiates the PDU session establishment procedure towards the core network, indicating UE2 as the target UE for communication. During the procedure, the UP security policy for UE1 is sent to the base station (e.g., eNB) by the core network. The UP security policy for UE1 can include a UE1-SAT-UE2 communication indication, which is also sent to the base station by the core network (e.g. the SMF 1 or AMF1), and the UE1-SAT-UE2 communication indication is used as part of session management subscription data or session management information. Upon receiving the UE1-SAT-UE2 communication indication, the base station should not immediately activate the Uu UP security policy for UE1, but will wait for the UP security policy for UE2 to be received during the PDU session establishment procedure of UE2.

In some embodiments, the UP security policy for UE1 can be the first information in the previous embodiments, and the UE1-SAT-UE2 communication indication for UE1 can be the first indication information in the previous embodiments.

In the step S5105, a PDU session of UE2 is established.

In some embodiments, when it is triggered by the network for the communication requested by UE1, UE2 initiates the PDU session establishment procedure towards the core network, indicating UE2 as the target UE for communication. During the procedure, the UP security policy for UE2 is sent to the base station (e.g., eNB) by the core network. The UP security policy for UE2 can include a UE1-SAT-UE2 communication indication, which is also sent to the base station by the core network (e.g., SMF2 or AMF2), and the UE1-SAT-UE2 communication indication is used as part of session management subscription data or session management information.

In some embodiments, the UP security policy for UE2 can be the second information in the previous embodiments, and the UE1-SAT-UE2 communication indication for UE2 can be the second indication information in the previous embodiments.

In some embodiments, the UP security policy for UE1 (UE1 UP security policy) may differ from the UP security policy for UE2 (UE2 UP security policy). Therefore, the Uu UP security protection activated for UE1 may differ from the Uu UP security protection activated for UE2.

In the step S5106, the base station determines how to activate the security protection for UE1 and UE2.

In some embodiments, the base station determines how to activates UP security consistently on both Uu interfaces with UE1 and UE2, based on the received UE1 UP security policy and UE2 UP security policy as follows:
Example 1: if UE1 UP security policy and UE2 UP security policy are consistent (e.g. both indicate "Required" or both indicate "Not Needed"), the base station takes the received UE1 UP security policy and UE2 UP security policy ("Required" or "Not Needed") for the consistent security protection on the UP data. Here, the consistent security protection can be understood as the same security protection being provided for the UP data of the first terminal and the second terminal; for example, using the same security policy.
Example 2: if both UE1 UP security policy and UE2 UP security policy indicate "Preferred", the base station determines the security policy on the UP data by itself.
Example 3: if one of the UE1 UP security policy and the UE2 UP security policy indicates "Required" while the other security policy indicates "Preferred", the base station takes "Required" as the security policy for consistent security protection on the UP data.
Example 4: if one of the UE1 UP security policy and the UE2 UP security policy indicates "Not Needed" while the other security policy indicates "Preferred", the base station takes "Not Needed" as the security policy for consistent security protection on the UP data.
Example 5: if one of the UE1 UP security policy and the UE2 UP security policy indicates "Required" while the other security policy indicates "Not Needed", it implies that consistent security protection on the UP data is not possible. Then the base station can determine to: reject the PDU session establishment with UE1 and UE2; or continue to activate Uu UP security protection for UE1 and UE2 respectively based on different security policies, i.e. activate inconsistent security protection on the UP data. Here, the inability to provide consistent security protection can be understood as the security protection on the UP data of the first terminal and the second terminal being different; for example, using different security policies.

In the step S5107, the base station activates the Uu UP security protection for UE1 and UE2.

In some embodiments, the gNB activates the Uu UP security protection for UE1 and UE2 based on the UP security policy determined in step S5106; this can also refer to the base station activating a security status of the security protection for UE1 and UE2, and the security status refers to a status that requires protection or does not require protection.

In the step S5108, the UP data exchanged between UE1 and UE2 and the base station respectively is subject to the security protection.

In some embodiments, the UP data exchanged between UE1 and UE2 via the base station is always subject to the security protection by the activated UP security policy.

The protection required in the above embodiments includes requiring confidentiality protection and/or integrity protection, and the protection not required includes not requiring confidentiality protection and/or not requiring integrity protection.

In embodiments of the present disclosure, individual embodiments can be implemented individually or in combination with each other, and steps in each embodiment can be distinguished by their order.

Embodiments of the present disclosure relate to an information processing method, which includes:
In some embodiments, the base station shall be able to receive the UE1-SAT-UE2 communication indication for UE (e.g., UE1, UE2) from the core network device.

In some embodiments, the base station shall be able to determine how to handle the UP security policies of the involved UEs (e.g., UE1, UE2) based on the UE1-SAT-UE2 indication from the core network device.

In some embodiments, the base station shall be able to determine on a consistent UP security policy for the UP data of the UE-SAT-UE communication, based on the UP security policies of the involved UEs (e.g., UE1, UE2).

In some embodiments, the base station shall be able to activate consistent Uu UP security protection on the UP data of the UE-SAT-UE communication, based on the UP security policy determined by itself.

In some embodiments, the core network device shall be able to send the UE1-SAT-UE2 communication indication as part of session management subscription data or session management information.

In embodiments of the present disclosure, some or all of the steps and their implementations can be arbitrarily combined with some or all of the steps in other embodiments, or arbitrarily combined with the implementations in other embodiments.

The embodiments of the present disclosure also provide an apparatus for implementing any of the above methods, for example, an apparatus is provided, and the above apparatus includes a unit or module for implementing each step performed by the terminal in any of the above methods. For another example, another apparatus is provided, including a unit or module for implementing each step performed by the network device (for example, the access network device, a core network functional node, or the core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuit. The above hardware circuit may be understood as one or more processors; for example, in one implementation, the hardware circuit is an application-specific integrated circuit (ASIC), and the functions of some or all of the above units or modules may be implemented by designing the logical relationship of the components in the circuit; for another example, in another implementation, the above hardware circuit may be implemented by a programmable logic device (PLD), and a Field Programmable Gate Array (FPGA) may be used as an example, which can include a large number of logic gate circuits, and the connection relationship between the logic gate circuits may be configured by the configuration file, thereby implementing the functions of some or all of the above units or modules. All units or modules of the above apparatus may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

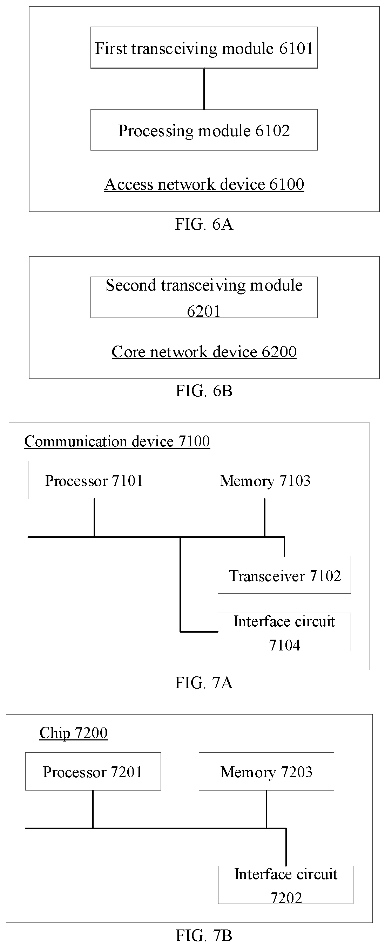

FIG. 6A shows a schematic structural diagram of an access network device 6100 provided in an embodiment of the present disclosure. As shown in FIG. 6A, the access network device 6100 includes a first transceiving module 6101 and a processing module 6102. In some embodiments, the first transceiving module 6101 is configured to receive first information and/or second information sent by a core network device. In some embodiments, the first transceiving module 6101 is configured to perform at least one of steps such as sending and/or receiving (e.g., steps S2101 and/or S2102 and/or step S2104, etc., but not limited thereto) performed by the access network device in any of the above methods, which will not be described in detail here. In some embodiments, the processing module 6102 is configured to determine security protection on UP data of a first terminal and UP data of a second terminal. In some embodiments, the processing module 6102 is configured to perform at least one of the steps such as processing (e.g., step S2103, etc., but not limited thereto) performed by the access network device in any of the above methods, which will not be described in detail here.

FIG. 6B is a schematic structural diagram of a core network device 6200 provided in an embodiment of the present disclosure. As shown in FIG. 6B, the core network device 6200 includes a second transceiving module 6201. In some embodiments, the second transceiving module 6201 is configured to send first information and/or second information to a core network device. In some embodiments, the second transceiving module 6201 is configured to perform at least one of steps such as sending and/or receiving (e.g., steps S2101 and/or S2102 and/or step S2104, etc., but not limited thereto) performed by the core network device in any of the above methods, which will not be described in detail here.

In some embodiments, the transceiving module can include a transmitting module and /or a receiving module, which may be separate or integrated. In some embodiments, the transceiving module may be interchangeable with a transceiver. For example, the first transceiving module described above includes a first transmitting module and/or a first receiving module. For example, the second transceiving module described above includes a second transmitting module and/or a second receiving module.

In some embodiments, the processing module may be a single module or can include multiple sub-modules. For example, the multiple sub-modules may each perform all or part of the steps required to be performed by the processing module. For example, the processing module may be interchangeable with a processor.

FIG. 7A is a schematic structural diagram of a communication device 7100 provided in an embodiment of the present disclosure. The communication device 7100 may be a network device (e.g., an access network device, a core network device, first network element, second network element, etc.), or a terminal (e.g., a user equipment, etc.), or a chip, a chip system, or a processor, etc. that supports a network device to implement any of the above methods, or a chip, a chip system, or a processor, etc. that supports a terminal to implement any of the above methods. The communication device 7100 may be used to implement the method described in the above method embodiments, and the details may refer to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. In some embodiments, the communication device 7100 is configured to execute any method described above. In some embodiments, one or more processors 7101 are used to call instructions so that the communication device 7100 performs any of the above methods.

In some embodiments, the communication device 7100 further includes one or more transceivers 7102. When the communication device 7100 includes one or more transceivers 7102, the transceiver 7102 performs at least one of the communication steps such as sending and/or receiving in the above method (e.g., step S2101 and/or step S2102, but not limited thereto), and the processor 7101 performs at least one of the other steps. In some embodiments, the transceiver can include a receiver and/or a transmitter, and the receiver and the transmitter may be separate or integrated. In some embodiments, the terms such as transceiver, transceiver unit, transceiver machine, transceiver circuit, interface circuit, interface, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the communication device 7100 further includes one or more memories 7103 for storing data. In some embodiments, all or part of the memories 7103 may also be outside the communication device 7100. In some embodiments, the communication device 7100 may further include one or more interface circuits 8104, which are connected to the memory 7103. The interface circuit 7104 can be used to receive data from the memory 7103 or other apparatuses, and can be used to send data to the memory 7103 or other apparatuses. For example, the interface circuit 7104 can read data stored in the memory 7103 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or may be part of a relatively large device. For example, the communication device may be: (1) an independent integrated circuit (IC), or a chip, or a chip system or subsystem; (2) a collection of one or more ICs, in some embodiments, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (7) others, etc.

FIG. 7B is a schematic structural diagram of a chip 7200 provided in an embodiment of the present disclosure. In the case where the communication device 7100 may be a chip or a chip system, reference may be made to the schematic structural diagram of the chip 7200 shown in FIG. 7B, but the present disclosure is not limited thereto.

The chip 7200 includes one or more processors 7201, and the chip 7200 is configured to perform any of the above methods.

In some embodiments, the chip 7200 further includes one or more interface circuits 7202. In some embodiments, the terms such as interface circuit, interface, and transceiver pin can be replaced with each other. In some embodiments, the chip 7200 further includes one or more memories 7203 for storing data. In some embodiments, all or part of the memories 7203 may also be outside the chip 7200. In some embodiments, the interface circuit 7202 is connected to the memory 7203. The interface circuit 7202 can be used to receive data from the memory 7203 or other apparatuses, and the interface circuit 7202 can be used to send data to the memory 7203 or other apparatuses. For example, the interface circuit 7202 can read the data stored in the memory 7203 and send the data to the processor 7201.

In some embodiments, the interface circuit 7202 performs at least one of the communication steps such as sending and/or receiving in the above method (e.g., step S2101 and/or step S2102, but not limited thereto). For example, the interface circuit 7202 performing the communication steps such as sending and/or receiving in the above method means that the interface circuit 7202 performs data interaction between the processor 7201, the chip 7200, the memory 7203, or the transceiver device. In some embodiments, the processor 7201 performs at least one of the other steps.

Various modules and/or devices described in various embodiments, such as virtual devices, physical devices, and chips, can be combined or separated arbitrarily as needed. In some embodiments, some or all steps can also be performed collaboratively by multiple modules and/or devices, which is not limited here.

The present disclosure also provides a storage medium, on which instructions are stored, and when the instructions are executed on the communication device 7100, the communication device 7100 executes any of the above methods. In some embodiments, the storage medium is an electronic storage medium. In some embodiments, the storage medium is a computer-readable storage medium, but is not limited thereto, and it can also be a storage medium readable by other apparatuses. In some embodiments, the storage medium can be a non-transitory storage medium, but is not limited thereto, and it can also be a temporary storage medium.

The present disclosure also provides a program product, and when the program product is executed by the communication device 7100, the communication device 7100 executes any one of the above methods. In some embodiments, the program product is a computer program product.

The present disclosure also provides a computer program, which, when executed on a computer, enables the computer to execute any one of the above methods.

## Claims

1. An information processing method, performed by an access network device, comprising:
determining security protection on User Plane (UP) data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

2. The method according to claim 1, wherein determining the security protection on the User Plane (UP) data of the first terminal and the second terminal comprises at least one of:
determining whether the security protection needs to be applied to the UP data of the first terminal and the second terminal;
determining whether consistent security protection is applied to the UP data of the first terminal and the second terminal; or
determining a security policy for the security protection on the UP data of the first terminal and/or the second terminal.

3. The method according to claim 1 or 2, wherein the method further comprises:
receiving first information sent by a core network device, wherein the first information comprises the first indication information; and
receiving second information sent by the core network device, wherein the second information comprises the second indication information.

4. The method according to any one of claims 1 to 3, wherein determining the security protection on the User Plane (UP) data of the first terminal and the second terminal based on the first indication information and the second indication information comprises one of:
in a case where the transmission mode of the UP data indicated by the first indication information and the transmission mode of the UP data indicated by the second indication information are UE-SAT-UE local transmission, determining to enable judgement of consistent security protection on the UP data of the first terminal and the second terminal;
in a case where the security policy of the UP data indicated by the first indication information and the security policy of the UP data indicated by the second indication information are the same and are a first type of security policy, determining that the consistent security protection is applied to the UP data of the first terminal and the second terminal;
in a case where the security policy of the UP data indicated by the first indication information and the security policy of the UP data indicated by the second indication information are the same and are a second type of security policy, determining that how to perform the consistent security protection on the UP data is determined based on the access network device; or
in a case where the security policy of the UP data indicated by the first indication information and the security policy of the UP data indicated by the second indication information are different, determining, according to categories of security policies respectively indicated by the first indication information and the second indication information, whether consistent protection is applied to the UP data of the first terminal and the second terminal.

5. The method according to claim 4, wherein, the first type of security policy comprises protection required or protection not required; and/or,
the second type of security policy comprises preferred protection, wherein the preferred protection indicates security protection selected by the access network device is preferred.

6. The method according to claim 4, wherein determining, according to the categories of security policies respectively indicated by the first indication information and the second indication information, whether the consistent protection is applied to the UP data of the first terminal and the second terminal comprises at least one of:
in a case where one of the first indication information and the second indication information indicates the first type of security policy and the other indicates the second type of security policy, determining that the consistent protection of the first type of security policy is applied to the UP data of the first terminal and the second terminal, wherein the first type of security policy comprises protection required or protection not required, and the second type of security policy comprises preferred protection; or
in a case where the first indication information and the second indication information indicate the first type of security policy, and the security policies indicated by the first indication information and the second indication information are different, determining that the consistent protection is unable to be applied to the UP data of the first terminal and the second terminal.

7. The method according to claim 4 or 6, wherein the method further comprises one of:
in a case where it is determined that the first terminal and the second terminal are unable to perform the consistent protection, rejecting to establish a session with the first terminal and the second terminal; or
in a case where it is determined that the first terminal and the second terminal are unable to perform the consistent protection, performing the security protection on the UP data of the first terminal based on the security policy indicated by the first indication information, and/or, performing the security protection on the UP data of the second terminal based on the security policy indicated by the second indication information.

8. The method according to any one of claims 1 to 7, wherein the method further comprises:
activating the security protection on the UP data of the first terminal and/or the second terminal based on a security policy for the UP data of the first terminal and the second terminal.

9. The method according to any one of claims 1 to 8, wherein the method further comprises:
sending third information to the first terminal and/or the second terminal, wherein the third information is configured to indicate the security protection on the UP data of the first terminal and/or the second terminal determined by the access network device, and the third information is used by the first terminal and/or the second terminal to perform the security protection on the UP data.

10. The method according to any one of claims 1 to 9, wherein the access network device comprises a satellite base station; and/or,
the core network device comprises: an Access and Mobility Management Function (AMF), a Session Management Function (SMF), or a Policy Control Function (PCF).

11. An information processing method, performed by a core network device, comprising:
sending first information to an access network device, wherein the first information comprises first indication information, and the first indication information is configured to indicate a transmission mode and/or a security policy of User Plane (UP) data of a first terminal; and
sending second information to the access network device, wherein the second information comprises second indication information, and the second indication information is configured to indicate a transmission mode and/or a security policy of UP data of a second terminal;
wherein the first indication information and the second indication information are used by the access network device to determine security protection on the UP data of the first terminal and the second terminal.

12. The method according to claim 11, wherein the method further comprises:
receiving the first information sent by the first terminal; and/or
receiving the second information sent by the second terminal.

13. The method according to claim 11 or 12, wherein the access network device comprises a satellite base station; and/or,
the core network device comprises: an Access and Mobility Management Function (AMF), a Session Management Function (SMF), or a Policy Control Function (PCF).

14. An access network device, comprising:
a first transceiving module, configured to determine security protection on User Plane (UP) data of a first terminal and a second terminal based on first indication information and second indication information, wherein the first indication information is configured to indicate a transmission mode and/or a security policy of the UP data of the first terminal, and the second indication information is configured to indicate a transmission mode and/or a security policy of the UP data of the second terminal.

15. A core network device, comprising:
a second transceiving module, configured to send first information to an access network device, wherein the first information comprises first indication information, and the first indication information is configured to indicate a transmission mode and/or a security policy of User Plane (UP) data of a first terminal; and
the second transceiving module, further configured to send second information to the access network device, wherein the second information comprises second indication information, and the second indication information is configured to indicate a transmission mode and/or a security policy of UP data of a second terminal;
wherein the first indication information and the second indication information are used by the access network device to determine security protection on the UP data of the first terminal and the second terminal.

16. A communication device, comprising:
one or more processors;
wherein the communication device is configured to execute the information processing method according to any one of claims 1 to 10 or claims 11 to 13.

17. A communication system, comprising: an access network device and a first device; wherein the access network device is configured to implement the information processing method according to any one of claims 1 to 10, and the first device is configured to implement the information processing method according to any one of claims 11 to 13.

18. A storage medium storing instructions, wherein, the instructions, when executed on a communication device, cause the communication device to perform the information processing method according to any one of claims 1 to 10 or the information processing method according to any one of claims 11 to 13.
